# EUROPÄISCHE PATENTSCHRIFT

(11) **EP 0 794 028 B1**
(45) Veröffentlichungstag und Bekanntmachung des Hinweises auf die Patenterteilung: **11.08.1999**
(21) Anmeldenummer: 96109745.8
(22) Anmeldetag: 18.06.1996
(51) Int. Cl.: B23K 9/025, B23K 26/00, B23K 31/02

(54) **Aus mindestens einem Steg und mindestens einem Flansch durch Strahlungsenergie zusammengeschweisster Profilträger mit Biegespannungskompensation**
Structural girder made out of at least one web and one flange welded by energy radiation with bending stress compensation
Poutre profilée composée d'au moins une âme et une semelle soudées par faisceau d'énergie avec compensation des contraintes de flexion

(30) Priorität: 31.08.1995 DE 19532084
(43) Veröffentlichungstag der Anmeldung: 10.09.1997
(73) Patentinhaber: Thyssen Stahl Aktiengesellschaft, 47166 Duisburg (DE)
(72) Erfinder: Behr, Friedrich, Prof. Dr.-Ing. habil., 47804 Krefeld (DE)
(74) Vertreter: Cohausz & Florack

(56) Entgegenhaltungen:
- DE-A- 3 243 761
- DE-C- 4 419 349
- US-A- 3 291 360
- AUTOMATIC WELDING, Bd. 36, Nr. 12, Dezember 1983, CAMBRIDGE GB, Seiten 3-7, XP002019516 VI MAKHNENKO ET AL: "Methods of improving the accuracy with which welded metal structures are fabricated"
- PATENT ABSTRACTS OF JAPAN vol. 8, no. 57 (M-283) [1494] , 15.März 1984 & JP-A-58 209484 (AKIRA HINA), 6.Dezember 1983,

## Beschreibung

Bei Profilträgern in Form von T- und H-Profilen handelt es sich grundsätzlich um durch Warmumformung hergestellte Profile. Solche Profile müssen nach der Warmumformung gerichtet werden. Die Dauerfestigkeit und Tragfähigkeit dieser Profile hängt bei gegebener geometrischer Dimension von der Art des Metalls ab. Das Verhältnis von Festigkeit dieser Profile und Materialeinsatz ist wegen der verhältnismäßig geringen oder fehlenden Kaltverfestigung des Materials nicht optimal.

Um dieses Verhältnis zu verbessern, ist in dem Patent DE 44 19 349 C1 vorgeschlagen worden, den Profilträger durch Zusammenschweißen von Steg und Flansch bildenden Flachmaterialstreifen herzustellen, nachdem zumindest der Steg durch Kaltverformung eine ebene Stirnfläche zum Anschweißen an dem Flansch erhalten hat. Es hat sich nun gezeigt, daß auf diese Art und Weise hergestellte Profilträger sich durch den Schweißvorgang verziehen.

Eine Biegespannungskompensation mittels einer Kontrolleinrichtung wurde im Dokument "Method of improving the accuracy with which welded metal structures are fabricated" (Automatic Welding, Bd 36, No 12, 1983 Cambridge) vorgeschlagen.

Der Erfindung liegt die Aufgabe zugrunde, einen aus mindestens einem Steg und mindestens einem Flansch bestehenden, durch Strahlungsenergie zusammengeschweißten maßhaltigen Profilträger zu schaffen, der gerade oder gekrümmt sein kann.

Diese Aufgabe wird durch einen aus mindestens einem Steg und mindestens einem Flansch durch Strahlungsenergie zusammengeschweißten Profilträger aus Metall, insbesondere Stahl, mit Biegespannungskompensation gemäß Anspruch 1 gelöst.

Diese Kompensierung der Biegespannung läßt sich auf verschiedene Art und Weise aufbringen.

Nach einer ersten Ausgestaltung der Erfindung weist das Profilteil für die kompensierende Biegespannung eine längs verlaufende Blindnaht auf. Sofern das Profilteil mindestens im Kantenbereich kaltverformt ist - z. B. entsprechend dem erwähnten deutschen Patent - liegt die Blindnaht in einem Abstand von dieser Kante, der größer als die Dicke des Profilteils ist. Insbesondere sollte sie außerhalb des kaltverformten Kantenbereichs liegen. Auf diese Art und Weise bleibt die durch die Kaltverformung erzielte, dem Profilträger zugute kommende Kaltverfestigung erhalten.

Alternativ oder auch zusätzlich zu dieser Art der Kompensation der Biegespannung kann das Profilteil eine plastische Kaltverformung z.B. durch Walzen, insbesondere einer ein- oder beidseitigen längsverlaufenden Nut, und dadurch hervorgerufen, die entgegengesetzt gerichtete Biegespannung aufweisen. Diese Kaltverformung sollte zwar in der Nähe der Schweißnaht von Steg und Flansch liegen, aber in einem Abstand von der Schweißnaht, der mindestens gleich der halben Dicke des Profilteils ist. Vorzugsweise sollte sie außerhalb der Wärmeeinflußzone dieser Schweißnaht liegen. Die nutenförmigen Kaltverformungen sind so gering, daß sie kaum sichtbar sind. Nuten mit einem Krümmungsradius von 20 mm und einer Tiefe von 0,01 bis 0,02 mm sind bei Stegen mit einer Dicke von ca. 4 mm ausreichend, um die Spannungskompensation zu erzielen.

Zur Vermeidung von Winkelverzug kann das Teil mit dem kleineren Flächenträgheitsmoment, bei einem T-Träger also der Flansch, geringfügig zur von dem Steg abgewandten Seite abgewinkelt sein. Ein geeignetes Winkelmaß, das die beiden Flanschschenkel anschließen, liegt bei 4°.

Das Anbringen einer kompensierenden Biegespannung in Form der Blindnaht und/oder in Form der kaltgewalzten Nuten kann vor oder nach dem Zusammenschweißen der Profilteile erfolgen. Vorzugsweise erfolgt es aber vor dem Zusammenschweißen. Damit dann die beiden Profilteile, von denen das kaltverformte Profilteil einen säbeligen Verlauf hat, einwandfrei mit dem anderen Profilteil zusammengeschweißt werden kann, werden vorzugsweise quer zur Längsrichtung der Profilteile schwimmend in einem Maschinenbett gelagerte, über die Länge des Profilteils verteilt angeordnete einzelne Einspannvorrichtungen eingesetzt, die es erlauben, das säbelige Profilteil und das andere Profilteil auf deren gesamter Länge spielfrei aneinanderzudrücken und in diesem Zustand zu halten, wenn sie unter dem Schweißkopf einer Schweißeinrichtung gefahren werden. Bei dieser Einspannung der Profilteile wird verhindert, daß beim Schweißen auftretende Wärmeverzugskräfte auf das Maschinenbett übertragen werden.

Im folgenden wird die Erfindung anhand einer einen T-Profilträger darstellenden Zeichnung näher erläutert.

Der in der Zeichnung dargestellte T-Profilträger besteht aus zwei Profilteilen, und zwar aus einem Flansch 1 und einem Steg 2. Diese beiden Profilteile sind über eine Längsschweißnaht 3 miteinander verbunden, die einen Abstand h_{N} von der neutralen Achse Z des fertigen Profilteils hat. Für die Herstellung dieser Schweißnaht 3 ist die entsprechende Kante des Steges 2 durch geeignete Vorbehandlung, insbesondere durch Kaltverformung, plan gemacht. Die Schweißverbindung wurde mit einem Laserstrahl hergestellt.

Der Flansch 1 ist leicht abgekantet. Seine beiden Schenkel schließen einen sehr kleinen Winkel β von rd. 4° ein. Wie in der Zeichnung angedeutet, ergibt sich beim herkömmlichen Zusammenschweißen von Flansch 1 und Steg 2 ein säbeliger Verlauf, der durch das Maß q beschrieben werden kann. Bei der Erfindung geht es darum, es zu einem solchen säbeligen Verlauf durch geeignete Maßnahmen am Steg 2 erst gar nicht kommen zu lassen.

Dafür sind am Steg 2 zwei Maßnahmen verwirklicht, die dem Steg 2 einen entgegengerichteten säbeligen Verlauf geben. Zum einen ist in der Nähe der durch Kaltverformung verfestigten freien Kante 4 eine Blindnaht 5 vorgesehen, die in einem Abstand h_{BN} von der erwähnten Achse Z und in einem Abstand von der Kante 4 verläuft, der mindestens gleich der Dicke d des Steges ist. Ferner sind in dem Steg 2 in der Nähe der Schweißnaht 3 beidseitig Nuten 6 durch Rollen eingewalzt. Der Abstand dieser Nuten 6 von der Naht 3 ist mindestens gleich der halben Stegdicke d. Die Nuten 6 sollten außerhalb der Wärmeeinflußzone der Naht 3 liegen. Die Nuten 6 sollten mit einem vergleichsweise großen Krümmungsradius eingewalzt werden.

Bei einer Stegdicke d = 4 mm sollte der Krümmungsradius ein Vielfaches, z.B. 20 mm, betragen. Die Tiefe der Nuten 6 kann vergleichsweise klein sein. Sie kann bei wenigen µm liegen. Bei den gegebenen Maßen wurden gute Ergebnisse mit einer Tiefe von 0,01 bis 0,02 mm erzielt.

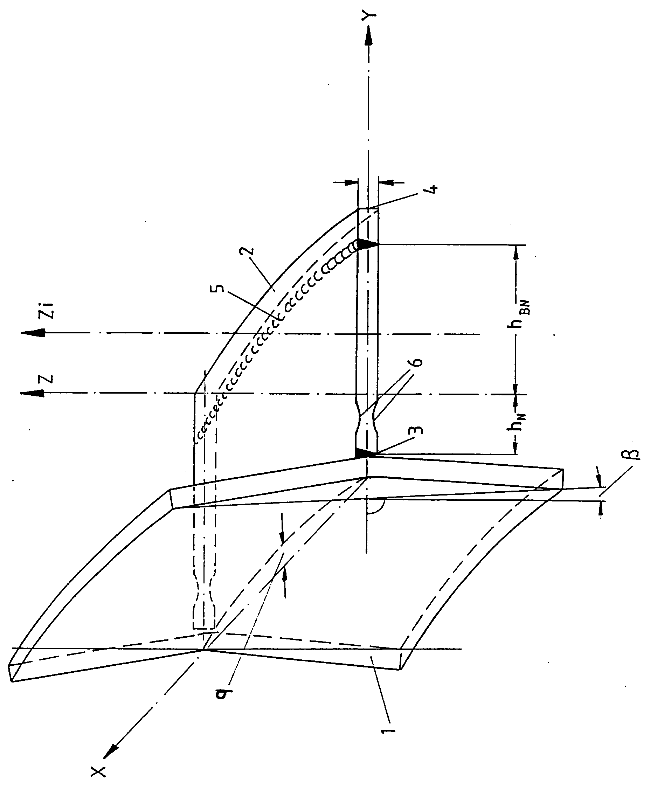

Sofern in dem Steg 1 eine Blindnaht 5 erzeugt und/oder Nuten 6 angewalzt werden, dann bewirkt die damit verbundene Biegespannung im Steg 1 eine Kompensation der beim Schweißen der Naht 3 entstehenden Biegespannung. Der Profilträger kann also nicht einen säbeligen Verlauf mit dem Maß q, wie in Fig. 1 dargestellt, haben, sondern ist nach der Schweißung gerade.

Damit sich der gewünschte maßhaltige, insbesondere gerade oder gekrümmte Verlauf des Profiträgers nach der Schweißung einstellt, sind in einem nicht dargestellten Maschinenbett mehrere Einspannvorrichtungen in der X-Achse nebeneinander angeordnet, mit denen der Flansch 1 und der Steg 2 auf ihrer gesamten Länge eingespannt werden können. Die Einspannvorrichtungen sind in Richtung der Y-Achse im Maschinenbett schwimmend gelagert. Dies ermöglicht eine Anpassung der Einspannvorrichtungen an den säbeligen Verlauf des vorbehandelten Steges 2. Nach dem Einspannen von Steg 2 und Flansch 1 liegen die beiden Profilteile fest aneinander. Wird nun die Schweißnaht 3 angebracht, dann können sich die Einspannvorrichtungen aufgrund ihrer schwimmenden Lagerung in Y-Achse verlagern, so daß sich nach dem Schweißen ein maßhaltiger, insbesondere gerader oder gekrümmter Verlauf des Profilträgers ergibt.

### Bezugszeichenliste:

- 1: Flansch
- 2: Steg
- 3: Verbindungsschweißnaht
- 4: kaltverfestigte Kante
- 5: Blindnaht
- 6: kaltverfestigte Nuten
- X, Y, Z: Richtungsachsen
- Z, Zi: Richtung der neutralen Achsen des größeren Flächenträgheitsmomentes, und zwar
- Z =: des fertigen Profils;
- Zi =: des Profilteils mit dem größeren Flächenträgheitsmoment von allen Teilen, bezogen auf die Z-Achse
- q: Maß der Säbeligkeit
- h_{N}: Abstand der Verbindungsnaht von der Z-Achse des fertigen Profilteils
- h_{BN}: Abstand der Blindnaht von der Z-Achse

## Patentansprüche

1. Aus mindestens einem Steg (2) und mindestens einem Flansch (1) durch Strahlungsenergie zusammengeschweißter Profilträger aus Metall, insbesondere Stahl, mit Biegespannungskompensation, **dadurch gekennzeichnet**, daß mindestens dasjenige Profilteil (1, 2) mit dem größten Flächenträgheitsmoment eine die schweißbedingte Biegespannung des Profilträgers kompensierende Biegespannung in Form einer längsverlaufenden Blindnaht (5) und/oder in Form einer längsverlaufenden plastischen Kaltverformung aufweist.

2. Profilträger mit längsverlaufender Blindnaht (5) nach Anspruch 1, **dadurch gekennzeichnet**, daß bei mindestens im Kantenbereich kaltverformtem Profilteil (2) die Blindnaht (5) in einem Abstand von dieser Kante (4) liegt, der größer als die Dicke (d) des Profilteils (2) ist.

3. Profilträger mit längsverlaufender Blindnaht (5) nach Anspruch 1 oder 2, **dadurch gekennzeichnet**, daß bei mindestens im Kantenbereich kaltverformtem Profilteil (2) die Blindnaht (5) außerhalb des kaltverformten kalten Kantenbereichs liegt.

4. Profilträger mit längsverlaufender plastischer Kaltverformung nach einem der Ansprüche 1 bis 3, **dadurch gekennzeichnet**, daß die plastische Kaltverformung von einer ein- oder beidseitig längsverlaufenden Nut (6) gebildet wird.

5. Profilträger mit längsverlaufender plastischer Kaltverformung nach einem der Ansprüche 1 bis 4, **dadurch gekennzeichnet**, daß die Kaltverformung (6) in der Nähe der Schweißnaht (3) von Steg (2) und Flansch (1) mit mindestens einem Abstand verläuft, der größer als die halbe Dicke (d) des Profilteils (2) ist.

6. Profilträger mit längsverlaufender plastischer Kaltverformung nach einem der Ansprüche 1 bis 5, **dadurch gekennzeichnet**, daß die Kaltverformung außerhalb der Wärmeeinflußzone der Schweißnaht (3) verläuft.

## Claims

1. A metal, more particularly steel beam welded together by radiant energy from at least one web (2) and at least one flange (1) and having bending stress compensation, **characterised in that** at least that beam element (web 1, 2 - sic!) which has the maximum angular impulse has a bending stress, in the form of a longitudinally extending dummy (blind) seam (5) and/or in the form of a longitudinally extending plastic cold working, which compensates the welding-conditioned bending stress of the beam.

2. A beam having a longitudinally extending blind seam (5), **characterised in that** when the beam (2) is cold-worked at least in the edge zone the blind seam (5) is disposed at a distance from said edge (4) which is larger than the thickness (d) of the beam element (2).

3. A beam having a longitudinally extending blind seam (5) according to claim 1, **characterised in that** when the beam element (2) is cold-worked at least in the edge zone the blind seam (5) is disposed outside the cold-worked cold edge zone.

4. A beam having a longitudinally extending plastic cold working according to one of claims 1 to 3, **characterised in that** the plastic cold working is formed by a groove (6) extending longitudinally on one or both sides.

5. A beam having a longitudinal extending plastic cold working according to one of claims 1 to 4, **characterised in that** adjacent the weld (3) of web (2) and flange (1) the cold working (6) extends at at least a distance which is larger than half the thickness (d) of the web (2).

6. A beam having a longitudinal extending plastic cold working according to one of claims 1 to 5, **characterised in that** the cold working extends outside the heat affected zone of the weld (3).

## Revendications

1. Support profilé métallique, notamment en acier, formé par assemblage par soudage, avec une énergie de rayonnement, d'au moins une barrette (2) et d'au moins une bride (1), avec compensation des contraintes de flexion, caractérisé en ce qu'au moins la pièce profilée (1, 2) présentant le moment d'inertie géométrique maximum possède une contrainte de flexion, qui compense la contrainte de flexion, conditionnée par le soudage, du support profilé et se présente sous la forme d'un joint longitudinal soudé sans métal d'apport (5) et/ou sous la forme d'une déformation plastique longitudinale à froid.

2. Support profilé comportant un joint longitudinal soudé sans apport de métal (5) selon la revendication 1, caractérisé en ce que dans le cas d'une pièce profilée (2) déformée à froid au moins au niveau de son bord, le joint soudé sans métal d'apport (5) est situé à une distance de ce bord (4), supérieure à l'épaisseur (d) de la pièce profilée (2).

3. Support profilé comportant un joint longitudinal soudé sans métal d'apport (5) selon la revendication 1 ou 2, caractérisé en ce que dans le cas d'une pièce profilée (2) déformée à froid au moins au niveau du bord, le joint soudé sans métal d'apport (5) est situé à l'extérieur de la partie de bord froide déformée à froid.

4. Support profilé présentant une déformation longitudinale plastique à froid selon l'une des revendications 1 à 3, caractérisé en ce que la déformation plastique à froid est constituée par une rainure longitudinale (6) située sur une face ou sur les deux faces.

5. Support profilé comportant une déformation longitudinale plastique à froid selon l'une des revendications 1 à 4, caractérisé en ce que la déformation à froid (6) s'étend à proximité du joint soudé (3) de la barrette (2) et de la bride (1) à au moins une distance supérieure à la moitié de l'épaisseur (d) de la pièce profilée (2).

6. Support profilé présentant une déformation longitudinale plastique à froid selon l'une des revendications 1 à 5, caractérisé en ce que la déformation à froid s'étend à l'extérieur de la zone d'influence de la chaleur du joint soudé (3).
